# EUROPEAN PATENT APPLICATION

(11) **EP 2 706 490 A1**
(43) Date of publication of application: **12.03.2014**
(21) Application number: 13182930.1
(22) Date of filing: 04.09.2013
(51) Int. Cl.: G06Q 10/08, G06Q 30/06

(54) **Self-service distribution system and method**

(30) Priority: 05.09.2012 CN 201210346423; 25.12.2012 CN 201210569756
(71) Applicant: Beijing Jingdong Century Trading Co., Ltd., Beijing 100176 (CN)
(72) Inventor: Zhang, Yongcheng, 100176 Beijing (CN); Yang, Kai, 100176 Beijing (CN); Hou, Leipo, 100176 Beijing (CN); Li, Dingyin, 100176 Beijing (CN)
(74) Representative: Dantz, Jan Henning

(57) **Abstract**

The present invention relates to a self-service distribution system and method. The self-service distribution system comprises an e-commerce system and locker terminals, the e-commerce system comprising an order-placing subsystem, a warehouse and distribution subsystem and a locker management subsystem, and the locker terminals being used for storing items or packages ordered by customers and allowing the customers to pick up the ordered items or packages therefrom. The order-placing subsystem is used by the customer to place an order online and transmit the order to the distribution subsystem for execution, the warehouse and distribution subsystem is used for storing and managing items, preparing the items according to the order, shipping the items from the warehouse, and delivering, by a carrier, the ordered items or packages to a locker terminal chosen by a customer, and the locker management subsystem is interfaced with the order-placing subsystem and the warehouse and distribution subsystem, to receive information transmitted by the locker terminal and sends instructions to the locker terminal to manage it.

## Description

### Technical Field

The present invention relates to a self-service distribution system and method.

### Background Art

Currently, in the filed of e-commerce (or online shopping), there are mainly two modes for delivering items or packages ordered by a customer to him/her: one is that a carrier (distribution person) delivers the items or packages to the customer at home or at workplace; the other is that the customer goes to a self-pick-up point of the e-commerce company for pick-up.

However, the above two modes have great disadvantages. First, for the first mode, the carrier needs to enter the customer's residential quarter or workplace, while most residential quarters or workplaces do not allow a carrier to enter freely. Furthermore, even if the carrier is allowed, the customer needs to stay at home or workplace waiting for the carrier, which is convenient. Second, for the second mode, since the customer is usually very far from the self-pick-up points, he would not like to spend lots of time for self pick-up.

The current e-commerce systems usually comprise such two sections as an order-placing subsystem and a warehouse and distribution subsystem. The order-placing subsystem provides to the customer functions of items browsing, online order-placing, etc., and sends instructions to the distribution subsystem for execution, while the warehouse and distribution subsystem is for, upon receiving the order information, shipping the items from the storehouse, sorting or distributing the items. Then the items are finally delivered to the customer.

In one word, the current distribution modes have the disadvantages of low efficiency, high cost, and so on. Therefore, it's expected that there can be an improved distribution system and method.

### Summary of the Invention

To resolve the above mentioned disadvantages and problems in the prior art, the present invention is proposed.

According to one aspect of the present invention, the present invention provides a self-service distribution system, comprising an e-commerce system and locker terminals connected with the e-commerce system via a network, the e-commerce system further comprising an order-placing subsystem, a warehouse and distribution subsystem and a locker management subsystem, and the locker terminals being used for storing items or packages ordered by customers and allowing the customers to pick up the ordered items or packages therefrom, wherein the order-placing subsystem is used by a customer to place an order online and transmit the order to the distribution subsystem for execution; and wherein the warehouse and distribution subsystem is used for storing and managing the items, preparing the items according to the order and shipping the items from the warehouse, and delivering, by a carrier, the ordered items or packages to the locker selected by the customer, and wherein the locker management subsystem is interfaced with the order-placing subsystem and the warehouse and distribution subsystem, to receive information transmitted by a locker terminal and send instructions to the locker terminal to manage the locker terminal.

Optionally, one of the warehouse and distribution subsystem and the locker management subsystem comprises a pick-up voucher module for sending a pick-up voucher to the customer upon completion of item dropping.

Optionally, the locker terminal comprises a validation module for validating the pick-up voucher input by the customer.

Optionally, the locker terminal comprise a transmitter for transmitting information to the e-commerce system after the carrier has dropped the items or packages to the locker terminal or the customer has picked up the items.

Optionally, the order-placing subsystem comprises a distribution mode selection module for allowing the customer, when placing an order online with the order-placing subsystem, to select the distribution mode of self-service locker pick-up as well as allowing the customer to select a specific locker terminal.

Optionally, the locker terminals are located in at least one of the supermarkets, libraries, parks, corporate buildings, and residential quarters.

Optionally, the pick-up voucher is one of a deliver code, a digital validation code or an electronic bar code.

Optionally, the order-placing subsystem displays to the customer the locker terminals available when the customer selects the distribution mode of self-service locker pick-up.

Optionally, in the case where the customer has previously selected the distribution mode of self-service locker pick-up, the order-placing subsystem displays by default the locker terminal previously selected by the customer.

Optionally, the order-placing subsystem comprises a locker reservation determination module for the customer, after having selected a specific locker terminal, to access the locker management subsystem in order to determine whether vacant locker resources are available for dropping the ordered items or packages.

Optionally, the locker management subsystem comprises a locker resource management module for recording whether each locker in the locker terminal can be reserved.

According to another aspect of the present invention, the present invention provides a self-service distribution method, comprising: placing, by a customer, an order online through an order-placing subsystem, wherein the customer selects the distribution mode of self-service locker pick-up as well as a specific locker terminal; sending, by the order-placing subsystem, the customer' s order to a warehouse and distribution subsystem; delivering, by the warehouse and distribution subsystem, the ordered items or packages to the locker terminal selected by the customer; sending information, by the locker terminal, to a locker management subsystem or the warehouse and distribution subsystem to notify completion of the dropping; sending, by the locker management subsystem or the warehouse and distribution subsystem, a pick-up voucher to the customer; and picking up the items by the customer with the pick-up voucher.

Optionally, the method further comprises sending, by the locker terminal, information to the locker management subsystem to notify that the lockers in the locker terminal can be reserved after the items have been picked up by the customer.

Optionally, the method further comprises setting the locker terminal in a "vacant" status after a predetermined period of time from completion of the dropping.

Optionally, the method further comprises displaying, by the order-placing system, the locker terminals available to the customer when the customer selects the distribution mode of self-service locker pick-up.

Optionally, a locker terminal previously selected by the customer is displayed by default in the case where the customer has previously selected the distribution mode of self-service locker pick-up.

Optionally, the method further comprises accessing the locker management subsystem after the customer selects a specific locker terminal to determine whether vacant locker resources are available for dropping the ordered items or packages.

Optionally, the method further comprises automatically setting, by the warehouse and distribution subsystem or the locker management subsystem, an order exceeding the predetermined period of time as an outdated order.

### Brief Description of the Drawings/Figures

The above and other aspects, features and advantages of the present invention will become more apparent to those skill in the art by describing in detail exemplary embodiments thereof with reference to the following figures:
Fig. 1 is a block diagram of the self-service distribution system according to the present invention; and
Fig. 2 is a flow chart of the self-service distribution method according to the present invention.

### Detailed Embodiments of the Invention

The following part will illustrate exemplary embodiments of the present invention with reference to the figures, including various details of the embodiments of the present invention for better understanding. The following embodiments should be regarded only as illustrative. Therefore, those skilled in the art should appreciate that various changes or modifications will not depart from the scope and spirit of the present invention as defined in the embodiments above. Similarly, for clarity and simplicity, the depictions of the known functions and structure are omitted.

The self-service distribution system and method according to the present invention provides to a customer a service for picking up items or packages by himself/herself, in which lockers, used as terminals, are highly integrated with the distribution system, to thereby construct an intelligent self-service distribution system. A carrier can deliver items or packages to a locker terminal designated by the customer, and then the customer can go directly to pick up from the locker terminal with the pick-up voucher after receiving the item or package dropping message. During the whole transaction, all dada interactions are completed automatically through the system, which is not only convenient for the customer but also improves the carrier' distribution efficiency and reduces distribution cost.

The following will illustrate in detail the present invention with reference to the figures.

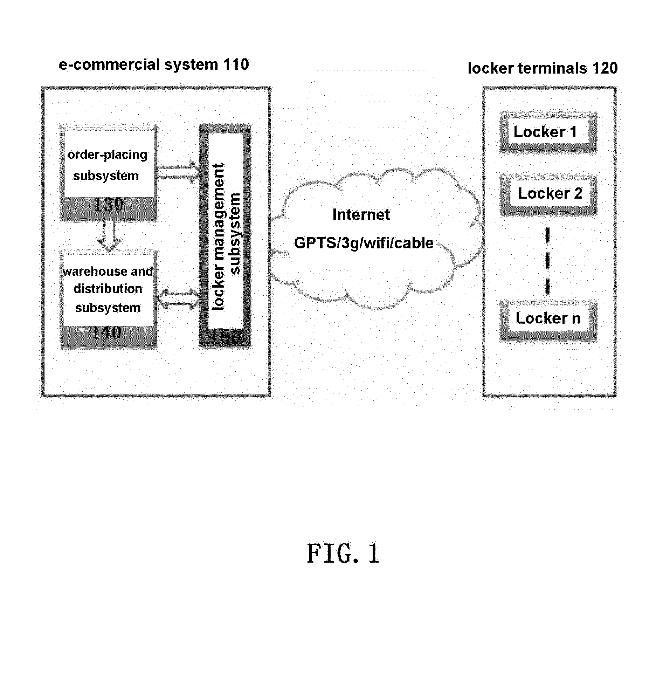

Fig. 1 is a block diagram of the self-service distribution system according to the present invention.

As shown in Fig. 1, the self-service distribution system according to the present invention comprises an e-commerce system 110 and locker terminals 120 which are interconnected via a network, such as the Internet (including, e.g., GPRS, 3G, Wifi, and cable wires, etc)

The e-commerce system 110 further comprises an order-placing subsystem 130, a warehouse and distribution subsystem 140 and a locker management subsystem 150.

The locker terminals 120 are for storing the items or packages ordered by the customers and allow the customers to pick up the ordered items or packages therefrom. The locker terminals can be located in supermarkets, libraries, parks, corporate buildings, residential quarters, etc.. Besides, a locker terminal can include many lockers, each of which can store items or packages of an order.

A locker terminal 120 can comprise a validation module for validating the pick-up voucher input by the customer, and thereby allowing the customer to pick up items or packages with the pick-up voucher. When the pick-up voucher input by the customer is correct, the corresponding locker is opened, while an indication showing a wrong pick-up voucher will be issued if the pick-up voucher input by the customer is wrong.

A locker terminal 120 can comprise an input module for the carrier or the customer to input information. The input module can be a scanner or a keypad. For example, when a carrier delivers some items, he can scan the bar code of an order (when the input module is a scanner) or input the order number (when the input module is a keypad) through the input module.

A locker terminal 120 can comprise a transmitter for transmitting information to the e-commerce system 110 (such as the warehouse and distribution subsystem 140 or locker terminal management subsystem 150 of the e-commerce system 110) after the carrier has delivered the items or packages to the lockers of the locker terminal or after the customer has picked up the items or packages. A locker terminal 120 can comprise a payment module through which the customer completes the payment.

The order-placing subsystem 130 is used for the customer to place an order online, and sends the order to the warehouse and distribution subsystem 140. Optionally, the order-placing subsystem 130 can send the order to a locker terminal 120.

In one embodiment of the present invention, the order-placing subsystem 130 can comprise a distribution mode selection module, for allowing the customer, when placing an order online with the order-placing subsystem, to select the distribution mode of self-service locker pick-up as well as a specific locker terminal. For example, when a customer selects the distribution mode of self-service locker pick-up, the order-placing subsystem 130 can display to the customer the locker terminals available. Optionally, in the case where the customer has previously selected the distribution mode of self-service locker pick-up, the locker terminal previously selected by the customer can be displayed by default.

In one embodiment of the present invention, the order-placing subsystem 130 can comprise a locker reservation determination module for the customer to access the warehouse management subsystem 130 (such as the locker resource management module therein) after having selected a specific locker terminal, in order to determine whether vacant locker resources are available for dropping the ordered items or packages. If there are no vacant lockers, the customer can be prompted to reselect a locker terminal or an indication of failure of this order can be issued.

The warehouse and distribution subsystem 140 is used for storing and managing items, preparing the items according to the order and shipping the items from the warehouse, and for the carrier to deliver the ordered items or packages to the locker terminal selected by the customer. For example, the warehouse and distribution subsystem 140 can arrange the cargo according to a preset arrangement order, locate and prepare the cargo according to the preset arrangement order upon receiving a purchasing order, ship the cargo after the cargo has been prepared, and call in specific carriers to deliver the items or packages.

The warehouse and distribution subsystem 140 can comprise a pick-up voucher module for sending the pick-up voucher to the customer upon completion of item dropping, such as sending information to the customer's mobile phone or e-mail, etc., for the customer to pick up the items or packages. The pick-up voucher can be, e.g., a pick-up code, a digital validation code or an electronic bar code.

In one embodiment of the present invention, the warehouse and distribution subsystem 140 can comprise a pick-up information module for sending pick-up information to the customer when he has not made the payment after placing an order, and a pick-up voucher module for sending a pick-up voucher to the customer when he has made the payment through, e.g., the payment module of the locker terminal.

The locker management subsystem 150 is interfaced with the order-placing subsystem 130 and the warehouse and distribution subsystem 140, for receiving information transmitted by the locker terminal and sending instructions to the locker terminal to manage the locker terminal. For example, when the customer has completed the pick-up from the locker, the locker management subsystem 150 can receive the delivery completion message sent by the locker terminal. In another example, the locker management subsystem 150 can send to the locker terminal 120 the outdated order that can be either generated by the warehouse and distribution subsystem and then transmitted to the locker management subsystem, or generated directly by the locker management subsystem.

In one embodiment of the present invention, the locker management subsystem 130 can comprise a locker resource management module for recording whether each locker in the locker terminal can be reserved (that is, whether it is being taken up). If a locker has been taken up by items or packages, then this locker cannot be reserved.

The following will further illustrate the self-service distribution system according to the embodiments of the present invention.

The customer places an order online with an order-placing subsystem, which can be implemented with a user interface in the form of, e.g., software or hardware. For example, when the customer logs onto an e-commerce website for shopping a certain item, he enters the order-placing user interface. The user interface can allow the customer to choose whether he will use the distribution mode of self-service locker pick-up (which can be, e.g., realized through a drop-down menu or a radio button), and when the customer selects the distribution mode of self-service locker pick-up, the user interface can display to the customer the locker terminals available (which can be realized through a drop-down menu, list, etc.). In the case where the customer has previously selected the distribution mode of self-service locker pick-up, the order-placing subsystem can display by default the locker terminal previously selected by the customer. When the customer selects a specific locker terminal, the order-placing subsystem can access the locker management subsystem (e.g., the locker resource management module included therein), to determine whether vacant locker resources are available for dropping the ordered items or packages. If there are no vacant lockers available, the order-placing subsystem can prompt the customer to reselect a locker terminal or issue an indication that this order-placing fails; if there are vacant lockers available, an order-placing mode generally used can be adopted (e.g., selecting an item's quantity, type, color, etc., and then clicking the "submit" button.) Besides, after the customer has placed an order, the locker management subsystem can change the status of the reserved locker, e.g., from "vacant" to "reserved".

After successful order-placing, the order-placing subsystem transmits the order to the warehouse and distribution subsystem. Optionally, the order can be transmitted to the locker terminal. Upon receiving the order, the warehouse and distribution subsystem (e.g., through cargo sorting staff) locates and prepares the items on the purchasing order according to the arrangement order, ships the items upon completing the preparation of the items, and then calls in specific carriers to drop the ordered items or packages.

The carrier drops the ordered items or packages to the locker terminal. For example, through inputting into the locker terminal an order number or scanning a bar code of the order, etc., the locker terminal can open the corresponding locker, the ordered items or packages can then be dropped into the locker and the locker will be closed.

After dropping is completed (e.g., through the carrier selecting completion of the dropping on the locker's interface), the locker sends the order number corresponding to the ordered items or packages to the e-commerce system. The e-commerce system then invokes the warehouse and distribution subsystem to send a pick-up voucher (a pick-up code, a digital validation code or an electronic bar code, etc.) to the customer, e.g., to the customer's mobile phone, email address, etc.. If the customer did not make the payment when the order was placed, the warehouse and distribution subsystem can send pick-up information to the customer first, and after the customer has made the payment through the payment module of the locker terminal, the pick-up voucher can be sent to the customer. After the customer has input the received pick-up voucher, the locker terminal can validate the input pick-up voucher with the validation module. If the pick-up voucher is correct, the corresponding locker will be opened; if the pick-up voucher is wrong, the locker terminal will issue an "invalid" alert.

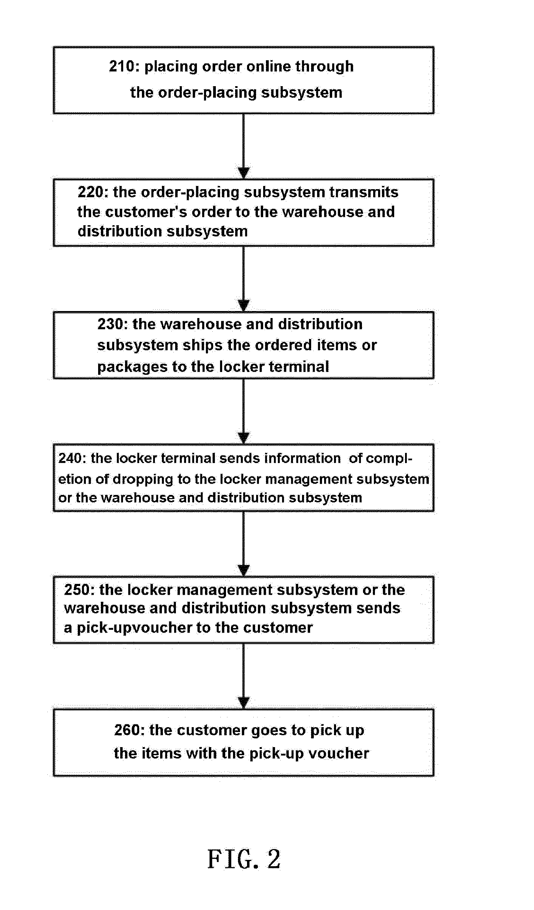

Fig. 2 is a flow chart of the self-service distribution method according to the present invention.

As shown in Fig. 2, the self-service distribution method according to the present invention starts at Step 210, at which the customer places an order online through the order-placing subsystem, wherein the customer selects the distribution mode of self-service locker pick-up as well as a specific locker terminal. In one embodiment, when the customer selects the distribution mode of self-service locker pick-up, the order-placing subsystem displays to the customer the locker terminals available. Optionally, in the case where the customer has previously selected the distribution mode of self-service locker pick-up, the locker terminal previously selected by the customer can be displayed by default.

Optionally, at this step, when the customer has selected a specific locker terminal, he can access the locker management subsystem (e.g., the locker resource management module therein) to determine whether vacant locker resources are available for dropping the ordered items or packages. If there is no vacant locker available, the locker management subsystem can prompt the customer to reselect a locker terminal or issue an indication that that this order-placing fails.
At Step 220, the order-placing subsystem transmits the customer's order to the warehouse and distribution subsystem 220.

At Step 230, the warehouse and distribution subsystem ships the ordered items or packages to the locker terminal selected by the customer.

At Step 240, the locker sends information of shipment completion to the locker management subsystem or the warehouse and distribution subsystem.

At Step 250, the locker management subsystem or the warehouse and distribution subsystem sends the pick-up voucher to the customer. As illustrated above, the locker management subsystem or the warehouse and distribution subsystem, e.g., sends information to customer's mobile phone or e-mail for the customer to pick up the items or packages. The pick-up voucher can be a pick-up code, a digital validation code or an electronic bar code, etc.. It should be mentioned that, when the locker terminal sends the information to the locker management subsystem at Step 240, the locker management subsystem sends a pick-up voucher to the customer at Step 250. On the other hand, when the locker terminal sends the information to the warehouse and distribution subsystem at Step 240, the warehouse and distribution subsystem sends a pick-up voucher to the customer at Step 250.

Optionally, if the customer has not made the payment when placing the order, the method further comprises, before the pick-up voucher is sent to the customer: sending delivery information to the customer, and sending the pick-up voucher to the customer after the customer has completed the payment , e.g., with the payment module of the locker terminal.

At Step 260, the customer goes to pick up the items with the pick-up voucher. For example, the customer can input the pick-up voucher into the locker, and when the validation is successful, the locker can be opened automatically. Optionally, after the customer has completed the pick-up, the locker terminal can send information to the locker management subsystem to notify that lockers in the locker terminal can be reserved. However, the locker terminal can also be configured so that it does not send information to the locker management system to notify that the locker terminal can be reserved. Instead, after a predetermined period of time from completion of the dropping, the locker management subsystem can set the locker terminal in a "vacant" status. For example, when the carrier has dropped items or packages to the first locker of the first locker terminal, the locker management subsystem starts the ticking of time. When reaching a predetermined time (such as 12 hours, 1 day, 2 days, 3 days, 5 days, 7days later, etc.), the locker management subsystem automatically sets the first locker of the first locker terminal in a "vacant" status. If the carrier drops new items or packages to the first locker and the previous items or packages have not been picked up, the order corresponding to the previous items or packages can be set as "outdated".

Optionally, the warehouse and distribution subsystem or the locker management subsystem sets automatically the order exceeding the predetermined time period as an outdated order, and informs the carrier about it or transmits it to the locker. Then the carrier can open the locker for returning the items or packages.

It needs to be pointed out that the above depiction illustrates the embodiments of the device and method respectively according to the present invention. However, the detail descriptions of one embodiment can also be applied to another one.

The above describes the present invention's basic principles with reference to the specific embodiments. However, it is necessary to point out that those skilled in the art shall understand that all or any step or part of the method and device of the present invention can be realized through hardware, firmware, software or a combination thereof. This can be realized by those skilled in the art by applying their basic programming skills after they read the description of the present invention.

The purpose of the present invention can also be achieved by running a software module or a set of software modules on any computing device. The computing device can be a general device known. Therefore, the purpose of the present invention can also be achieved only by providing a program product including program codes realizing the above described method or device. That is, such a program also constitutes the present invention, and such a storage medium storing such a program product also constitutes the present invention. Obviously, such a storage medium can be any known storage medium or any storage medium developed in the future.

While this specification contains many specific implementation details, these should not be construed as limitations on the scope of any of the invention or of what may be claimed, but rather as descriptions of features that may be specific to particular embodiments of the particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

A computer program (also called program, software, software application, script or code) may be compiled in any type of programming language, including compiled languages, interpretive languages, declarative or procedural languages which can be arranged in any form, e.g., as an independent program, or a module, a component, a sub-program, or other units adapted for utilization in the computing environment. The computer program does not need to correspond to the files in the file system; instead, it can be stored in one part of other files keeping other programs or data (e.g., one or more scripts stored in a mark-up language document), one file or multiple coordinated files (e.g., the file storing one or more modules, sub-programs, or partial codes) specifically used for the program in question.

The above specific embodiments do not impose a restriction on the protection scope of the present invention. Those skilled in the art shall understand that, based on design requirements and other factors, various modifications, combinations, sub-combinations and substitutes can be occur. Any modifications, equivalent substitutes, improvements, etc. within the spirit and principle of the present invention shall be regarded as within the protection scope of the present invention.

## Claims

1. A self-service distribution system, comprising an e-commerce system and locker terminals connected with the e-commerce system via a network, the e-commerce system comprising an order-placing subsystem, a warehouse and distribution subsystem, and a locker management subsystem,
wherein the locker terminals are used for storing items or packages ordered by customers and allowing the customers to pick up the ordered items or packages therefrom;
wherein, the order-placing subsystem is used by the customer to place an order online and transmit the order to the distribution subsystem for execution; wherein the warehouse and distribution subsystem is used for storing and managing the items, preparing the items according to the order and shipping the items from the warehouse, and for a carrier to deliver the ordered items or packages to the locker terminal selected by the customer; and
wherein the locker management subsystem is interfaced with the order-placing subsystem and the warehouse and distribution subsystem, to receive information transmitted by the locker terminal and sending instructions to the locker terminal to manage the locker terminal.

2. The self-service distribution system according to claim 1, wherein one of the warehouse and distribution subsystem and the locker management subsystem comprises a pick-up voucher module for sending a pick-up voucher to the customer upon completion of item dropping.

3. The self-service distribution system according to claim 1, wherein the locker terminal comprises a validation module for validating the pick-up voucher input by the customer.

4. The self-service distribution system according to claim 1, wherein the locker terminal comprise a transmitter for transmitting information to the e-commerce system after the carrier has dropped the items or packages to the locker terminal or the customer has picked up the items.

5. The self-service distribution system according to claim 1, wherein the order-placing subsystem comprises a distribution mode selection module for allowing the customer, when placing an order online with the order-placing subsystem, to select the distribution mode of self-service locker pick-up as well as a specific locker terminal.

6. The self-service distribution system according to claim 1, wherein the lockers are located in at least one of the supermarkets, libraries, parks, corporate buildings, and residential quarters.

7. The self-service distribution system according to claim 2, wherein the pick-up voucher is one of a delivery code, a digital validation code or an electronic bar code.

8. The self-service distribution system according to claim 5, wherein the order-placing subsystem displays to the customer the locker terminals available when the customer selects the distribution mode of self-service locker pick-up.

9. The self-service distribution system according to claim 1, wherein the locker management subsystem comprises a locker resource management module for recording whether each locker in the locker terminal can be reserved.

10. A self-service distribution method, comprising:
placing, by a customer, an order online through an order-placing subsystem,
wherein the customer selects the distribution mode of self-service locker pick-up as well as a specific locker terminal;
sending, by the order-placing subsystem, the customer's order to a warehouse and distribution subsystem;
delivering, by the warehouse and distribution subsystem, the ordered items or
packages to the locker terminal selected by the customer;
sending information, by the locker terminal, to a locker management subsystem or the warehouse and distribution subsystem to notify completion of the dropping;
sending, by the locker management subsystem or the warehouse and distribution subsystem, a pick-up voucher to the customer; and
picking up the items by the customer with the pick-up voucher.

11. The self-service distribution method according to claim 10, further comprising: after the customer has picked up the items, sending, by the locker terminal, information to the locker management subsystem to notify that the lockers of the locker terminal can be reserved.

12. The self-service distribution method according to claim 10, further comprising: setting the locker in a "vacant" status after a predetermined time period from completion of the dropping.

13. The self-service distribution method according to claim 10, further comprising: displaying, by the order-placing subsystem, the locker terminals available to the customer when the customer selects the distribution mode of self-service locker pick-up.

14. The self-service distribution method according to claim 13, further comprising: accessing the locker management subsystem after the customer has selected a specific locker terminal to determine whether vacant locker resources are available for dropping the ordered items or packages.

15. The self-service distribution method according to claim 10, further comprising: automatically setting, by the warehouse and distribution subsystem or the locker management subsystem, an order exceeding a predetermined period of time as an outdated order.
